# EUROPEAN PATENT APPLICATION

(11) **EP 0 740 447 A2**
(43) Date of publication of application: **30.10.1996**
(21) Application number: 96110436.1
(22) Date of filing: 24.09.1991
(51) Int. Cl.: H04M 1/274

(54) **Scanning of a speed dialling register for a telephone unit**

(30) Priority: 27.09.1990 FI 904776
(62) Divisional of application: 91116231.1
(71) Applicant: NOKIA MOBILE PHONES LTD., 24101 Salo (FI)
(72) Inventor: Jokinen, Tauno, 90650 Oulu (FI); Väisänen, Ahti, 90540 Oulu (FI)
(74) Representative: Johansson, Folke Anders

(57) **Abstract**

The invention relates to a register scanning method for a telephone unit, comprising a display unit and service buttons, as well as a programme-controlled processor unit with a storage element for the control of the operation of the telephone unit, and a register of alphanumeric codes arranged in a specific order. The method comprises scanning of the register in steps on the display unit by pressing of a particular service button by pressing the service button in a predetermined manner the scanning speed of the register is changed, preferably the scanning of the register becomes more rapid. This is achieved for example by pressing the service button continously. Alternatively, by a rapid double pressing of the service button a predetermined number of steps are skipped. The method is advantageously applied in mobile telephones, in particular car radiophones.

## Description

The invention relates to scanning of a register for a telephone unit, for example a speed dialling register, in accordance with the preamble of claim 1. A telephone unit is here taken as meaning all telephone applications, and in particular mobile telephones and car radiophones.

Speed dialling to facilitate the use of telephones has been known since a long time, especially as the caller has to dial long or/and frequently repeated telephone numbers. For instance in usual home telephones, repetition of the digit last dialled is implemented by actuating with a particular service button.

On the other hand, the storage of speed dialling numbers in a stored register is also known, an identification code being then added to the register besides the telephone number. The speed dialling number desired by the caller is selected by means of the identification code; in certain cases, such a speed dialling is called short code dialling. This dialling is usually assisted by a particular short code dialling register, e.g. in printed form. Recently the outprint has been replaced by a telephone display, which enables to use an alphanumerical character series in addition to the identification code or instead of it, the character series facilitating the identification and dialling of the desired telephone number.

Moreover, for instance in mobile telephones, particular service buttons are used for scanning the speed dialling register, whereby the register can be checked on the display one telephone number at the time. This is an advantage for the caller for instance when he is driving a car, since no special attention has to be paid to the digit or character buttons. The scanning also replaces exact memorizing of the selected speed dialling codes, in other words, it acts a "telephone diary" for the speed dialling operation. However, the scanning may become onerous if the register is large, and furthermore, the programming of the speed dialling operations may be difficult for the caller.

The present invention relates to a method of scanning a register of a telephone unit. The method according to the invention comprises scanning of a register in steps on a display unit by pressing of a particular service button, and by pressing the service button in a predetermined manner the scanning speed of the register is changed, preferably the scanning of the register becomes more rapid. This is achieved for example by pressing the service button continously. Alternatively, by a rapid double pressing of the service button a predetermined number of steps are skipped.

The characteristic features of the invention are presented in claim 1.

Optional embodiments of the invention are presented in the dependent claims. The invention is preferably applied to mobile telephones and particularly to telephones used in cars, where the telephone simplifies the use of the telephone.

The invention is described in further detail below.

It is supposed that a display and service buttons, as well as a microprocessor with a memory to control the telephone unit operation over programmes are provided in the mobile telephone (for instance NOKIA Talkman 620). The display may be of any known type, for instance an illuminated liquid crystal display, in which alphanumerical and graphical signals relating to the use of the telephone are displayed. The service keyboard comprises, besides ordinary digital buttons, function buttons for controlling the telephone operation in a manner known per se.

Thus, in accordance with the method of the invention, a programme segment controlling the operation is thus added to the software of the microprocessor of the telephone.

A battery-secured, ineffaceable memory is provided in the telephone, and the numbers are preserved in this memory also during a break in the supply voltage of the telephone, for instance during replacement or discharge of the batteries. In the determination of the size of the speed dialling memory, the longest possible number series, up to 18 digit-series including country and international codes, have been taken into account.

The memory available for the telephone sets a limit to the length of the register, and on the other hand, the usability of the register does no longer increase beyond a certain limit. This store location limit could be a number below 100, e.g. 98 locations.

The speed dialling numbers are utilized as an example in the following manner:

As the caller activates the mobile telephone in order to place a call, the number last dialled appears on the display, whereby it can be redialled by a simple pressing of a service button. For reasons of secrecy, the caller may erase the dialled number from the memory by pressing a specific combination of buttons at the end of the preceding call, so that this number can no longer appear on the display. In this case, no telephone number is displayed on the display unit. In both cases, the caller may now select the number at the top of the speed dialling register to be displayed by pressing a service button (NEXT for instance). A specific amount of numbers, e.g. the five numbers latest dialled, may be stored, whereby the caller may step to the second last number etc., by pressing a button.

The beginning of the dialing step may be optionally implemented so that, instead of the number last dialled, the one at the top of the speed dialling register, i.e. the "favoured number", appears directly on the display.

It can be supposed that the caller selects the desired function by means of the setting of the mobile telephone, i.e. whether the number last dialled, or the speed dialling number at the top, should be first displayed on the display unit.

The caller may scan the register one number at the time by pressing the service button (NEXT), until the desired speed dialling number appears on the display. In order to speed up the scanning, the caller may skip for instance 15 numbers in the register (in step cl) by selecting 15 with the digital buttons and pressing subsequently a particular service button (RCL). The caller may repeat the operations as many times as he wishes and vary the scanning manner as needed, until the desired speed dialling number appears on the display.

When the caller has obtained the desired telephone number on the display, he may activate the dialling, i.e. guide the telephone unit to transmit the displayed telephone number as a dialling signal to the telephone connection. The caller may of course dial the telephone number himself by using the digital buttons, regardless of the fact whether this desired number exists in the speed dialling register or not.

The inventive method described above may naturally be varied in many ways.

In scanning the register it is possible to implement either forward or backward scanning by using for instance the arrow buttons of the telephone unit (+ and -). A person skilled in the art also realizes that the skipping by means of the RCL button could be replaced by scanning the speed dialling register by pressing the NEXT button, starting slowly one number at the time, and going on more rapidly, by continuously pressing down the button. Optionally, a predetermined number of steps can be skipped in the register by a rapid double pressing of the NEXT button.

Finally it is conceivable that the adaptable speed dialling register is completed with codes, either numbers or alphanumerical character strings, inserted in the register by the caller. In this case the size of the speed dialling table has to be determined large enough to allow the addition of e.g. a 4-8-digit code at each number, besides the telephone numbers and accumulators. Thus, as the display is being scanned, it would show the telephone number together with a code, which enables a rapid identification and dialling of the desired telephone number.

The method according to the invention has been described above in connection with a mobile telephone, however its application is naturally not limited to a mobile telephone, but the method can be applied to all telephone units equipped with the essential elements in view of their function and operation, as mentioned above in the preamble.

## Claims

1. A register scanning method for a telephone unit, comprising a display unit and service buttons, as well as a programme-controlled processor unit with a storage element for the control of the operation of the telephone unit, and a register of alphanumeric codes arranged in a specific order, the method comprises scanning of said register in steps on the display unit by pressing of a particular service button, characterized in that by pressing said service button in a predetermined manner the scanning speed of the register is changed.

2. A method according to claim 1, characterized in that by pressing said service button continously the scanning speed of the register is changed.

3. A method according to claim 2, characterized in that by pressing said service button continously the register is scanned more rapidly.

4. A method according to claim 1, characterized in that by a rapid double pressing of said service button a predetermined number of steps are skipped.

5. A method according to claim 1, characterized in that said register is a speed dialling register.

6. A method according to claim 4, characterized in that said register includes telephone numbers.

7. A method according to claim 4, characterized in that said register includes character codes identifying telephone numbers.

8. A method according to any of the preceding claims, characterized in that by pressing a first service button the scanning is done forwards in the register and by pressing a second service button the scanning is done backwards in the register.

9. A method according to any of the claims 1 - 6, characterized in that by pressing a service button at one end the scanning is done forwards in the register and by pressing the service button at another end the scanning is done backwards in the register.

10. The application of the method of any of the preceding claims in a mobile telephone.
